# EUROPEAN PATENT APPLICATION

(11) **EP 1 819 089 A1**
(43) Date of publication of application: **15.08.2007**
(21) Application number: 05800183.5
(22) Date of filing: 01.11.2005
(51) Int. Cl.: H04L 9/32

(54) **NETWORK ACCESS SYSTEM, METHOD, AND STORAGE MEDIUM**

(30) Priority: 29.11.2004 JP 2004344277
(71) Applicant: IntelligentDisc, Inc., Yokohama-shi, Kanagawa 2220033 (JP); TOKYO ELECTRIC POWER COMPANY, Tokyo 100-8560 (JP)
(72) Inventor: SHIGETOMI, Takashi, IntelligentDisc, Inc., Yokohama-shi, Kanagawa 2220033 (JP); KARIMOTO, Hiroyasu, IntelligentDisc, Inc., Yokohama-shi, Kanagawa 2220033 (JP); NAKAMURA, Masaki, TOKYO ELECTRIC POWER COMPANY, Chiyoda-ku, Tokyo 1008560 (JP)
(74) Representative: Vossius & Partner
(86) International application number: PCT/JP2005/020092
(87) International publication number: WO 2006/057140

(57) **Abstract**

Only users registered beforehand in a network are able to obtain access to the network while maintaining strict security.

Living-body authentication information for living-body authentication of a user 1A and access authentication information required for access to a network determined for each user are stored on the memory region of an electronic circuit mounted on a disk (or on an external storage medium). When the disk is driven, living-body authentication information is acquired from the user by living-body authentication means 11E. The living-body authentication information is compared with the living-body authentication information stored in the electronic circuit (or the external storage medium). When both are the same, the access authentication information stored in the electronic circuit (or the external storage medium) is sent to the network. Based on the received access authentication information, the network decides whether the user is a regular user and, when the user is decided to be a regular user, allows the connection of the user terminal with a service community.

## Description

### FIELD OF THE INVENTION

The present invention relates to network access system and method and storage medium, and more particularly to network access system and method and storage medium that are capable of maintaining strict security.

### DESCRIPTION OF THE RELATED ART

With the rapid spread of the Internet and broadband network environments, individuals can receive a wide variety of services through the Internet. Each user can easily obtain access to network services by using a personal computer (PC) at home or using a portable terminal.

In these services, in the case where information is received by downloading, there is no fear of personal information of a user leaking out. In electronic commercial transactions such as a network auction, purchase of goods, etc., however, there is a danger of information leakage because personal information of a user must be disclosed. This type of electronic commercial transaction system is disclosed in Patent Document 1 by way of example.
[Patent Document 1] Japanese Patent Laid-Open Publication No. 2004-318497(FIG. 1, column no. [0009] - [0016] )

### DISCLOSURE OF THE INVENTION

### PROBLEMS TO BE SOLVED BY THE INVENTION

However, in most electronic commercial transactions, personal information, such as user's credit card number and term of validity, personal bank account, address, name, date of birth, etc., has to be disclosed. Since personal information input to networks depends upon how it is used in a destination terminal, there is no guarantee of security of personal information. Further, the personal information is unlimitedly delivered through networks, so there is a great fear of personal information being delivered to others at any moment.

Hence, to ensure security, systems using authentication means (ID, password, etc.,) for authenticating users have been put to practical use. However, there is always a loophole in such authentication systems, so personal information is sometimes stolen or altered by taking advantage of a system weakness. To enhance the security of an authentication system, it is useful to set ID and a password for each service, but since costs for the management are often charged on users, a cost problem remains unsolved.

In addition, there is a great danger that in electronic commercial transactions, personal information will be used to impersonate a user. Besides the impersonation of a user, there is a danger of impersonation even in famous sites because of the participation of malicious traders in reliable e-commerce.

Moreover, in services where users take part in communities through e-mail, e-mail addresses of users are disclosed to the third party, and consequently, there is another fear of users being under an attach of annoying e-mail before they know.

The present invention has been made in view of the problems described above. Accordingly, it is an object of the present invention to provide a network access system, method and a storage medium that are capable of overcoming such problems.

### MEANS FOR SOLVING THE PROBLEMS

In order to solve the above problems, network access system and method and storage medium according to the present invention employs the following featured structures.
(1) A network access system in which a user terminal connects to a service community provided in a service provider connected to a network by accessing said service community, comprising:
   a disk with an electronic circuit having a memory region on which living-body authentication information for living-body authentication of a user and access authentication information required for access to said network determined for each user are stored;
   living-body authentication means which, when said disk is started, acquires living-body information about said living-body authentication information from said user, compares said living-body information with said living-body authentication information stored in said electronic circuit, and when both are the same, sends said access authentication information stored in said electronic circuit to said network; and
   access authentication means, provided in said network, which, based on the received access authentication information, decides whether said user is a regular user and, when said user is decided to be a regular user, allows a connection of said user terminal with said service community.
(2) A network access system in which a user terminal connects to a service community provided in a service provider connected to a network by accessing said service community, comprising
   an external storage medium, connected to said user terminal and having a signal processing function, on which living-body authentication information for living-body authentication of a user and access authentication information required for access to said network determined for each user are stored;
   living-body authentication means which acquires living-body information about said living-body authentication information from said user, compares said living-body information with said living-body authentication information stored in said external storage medium, and when both are the same, sends said access authentication information stored in said external storage medium to said network; and
   access authentication means, provided in said network, which, based on the received access authentication information, decides whether said user is a regular user and, when said user is decided to be a regular user, allows a connection of said user terminal with said service community.
(3) The network access system as set forth in claim 1 or 2, wherein said electronic circuit or external storage medium stores access destination information, and said access destination information is sent out.
(4) The network access system as set forth in any one of claims 1 to 3, wherein said network is equipped with a management center for managing information which contains the access authentication information, the decision by said access authentication means being performed by comparison with access authentication information managed in said management center.
(5) A network access system for performing a connection to a community containing a society which is a server managed by a management center by access of a user terminal to said community through a network, said management center having access authentication information of a user allowed to connect to said community, said system comprising:
   said living-body authentication information detection means, incorporated in or connected to said user terminal, for detecting living-body authentication information of said user; and
   a disk drive connected to said user terminal; and
   a disk driven by said disk drive and having an electronic circuit in which the living-body authentication information of said user and access authentication information required for access to said network determined for each user are stored;
   wherein, when driving said disk by said disk drive, living-body authentication information detected from said user by said living-body authentication information detection means is compared with said living-body authentication information stored in said electronic circuit, and when both are the same, said access authentication information stored in said electronic circuit is sent to said management center through said user terminal;
   and wherein, when the received access authentication information is the same as access authentication information previously stored, said management center decides that said user is a regular user registered, and allows said user terminal to connect to said community.
(6) A network access system for performing a connection to a community containing a society which is a server managed by a management center by access of a user terminal to said community through a network, said management center having access authentication information of a user allowed to connect to said community, said system comprising:
   said living-body authentication information detection means, incorporated in or connected to said user terminal, for detecting living-body authentication information of said user; and
   an external storage medium, connected to said user terminal and having a signal processing function, on which living-body authentication information of said user and access authentication information required for access to said network determined for each user are stored;
   wherein living-body authentication information detected from said user by said living-body authentication information detection means is compared with said living-body authentication information stored in said external storage medium, and when both are the same, said access authentication information stored in said external storage medium is sent to said management center through said user terminal;
   and wherein, when the received access authentication information is the same as access authentication information previously stored, said management center decides that said user is a regular user registered, and allows said user terminal to connect to said community.
(7) The network access system as set forth in claim 5 or 6, wherein said electronic circuit or external storage medium stores access destination information, and said access destination information is sent out.
(8) The network access system as set forth in claim 5 or 6, wherein said management center has a user management center incorporated or connected, said user management center having personal information of said user and said access authentication information stored therein.
(9) The network access system as set forth in any one of claims 1 to 8, wherein said access authentication information contains user's ID and password.
(10) The network access system as set forth in any one of claims 1 to 9, wherein information transmission and reception of said user to and from said network is performed by a nickname previously given to said user.
(11) The network access system as set forth in any one of claims 1 to 10, wherein said access authentication information is enciphered and output from said user terminal, and said network decodes the enciphered access authentication information received.
(12) The network access system as set forth in any one of claims 1 to 11, wherein said access authentication information is changed each time access is performed by said user.
(13) The network access system as set forth in any one of claims 1 to 12, wherein said access authentication information that changes is processed based on an open cryptographic key and a secrete decoding key so that only said user terminal and said network can know.
(14) The network access system as set forth in any one of claims 1 to 13, wherein said network generates and enciphers access authentication information for the next access of said user and sends it to said user terminal, and at the time of the next access from said user terminal, said access authentication information received from said network is sent out.
(15) The network access system as set forth in any one of claims 1 to 14, wherein information on a user stored in said network is managed by a base code given to said user, and user information for specifying said user can be read and written only by a basic code comprising an auxiliary code generated in said electronic circuit and said base code.
(16) The network access system as set forth in any one of claims 1 to 14, wherein information on a user stored in said network is managed by a base code given to said user, and user information for specifying said user can be read and written only by a basic code comprising an auxiliary code generated in said external storage medium and said base code.
(17) The network access system as set forth in claim 15 or 16,
   wherein said auxiliary code is enciphered by an open cryptographic key and is sent from said user terminal, and said network uses said auxiliary code by decoding it with a secrete decoding code corresponding to said open cryptographic key.
(18) The network access system as set forth in any one of claims 1 to 17, wherein information transmission and reception between said user and said network is implemented through an enciphering process using an open cryptographic key and a decoding process using a secrete decoding key corresponding to said open cryptographic key.
(19) The network access system as set forth in any one of claims 1 to 18, wherein said living-body authentication information is fingerprint authentication information, face authentication information, voiceprint authentication information, or iris authentication information.
(20) The network access system as set forth in any one of claims 1 to 3, 7 to 15, and 17 to 19, wherein said disk is an optical disk.
(21) A network access method in which a user terminal connects to a service system connected to a network by accessing said service system, comprising the steps of
   storing, on a memory region of an electronic circuit mounted on a disk, living-body authentication information for living-body authentication of a user and access authentication information required for access to said network determined for each user;
   when said disk is started, detecting living-body information from said user by detection means, comparing said living-body information with said living-body authentication information stored in said electronic circuit, and when both are the same, sending said access authentication information stored in said electronic circuit to said network; and
   in said network, based on the received access authentication information, deciding whether said user is a regular user and, when said user is decided to be a regular user, allowing a connection of said user terminal with said service system.
(22) A network access method in which a user terminal connects to a service system connected to a network by accessing said service system, comprising the steps of:
   storing, on an external storage medium connected to said user terminal and having a signal processing function, living-body authentication information for living-body authentication of a user and access authentication information required for access to said network determined for each user;
   detecting living-body information from said user by detection means, comparing said living-body information with said living-body authentication information stored in said external storage medium, and when both are the same, sending said access authentication information stored in said external storage medium to said network; and
   in said network, based on the received access authentication information, deciding whether said user is a regular user and, when said user is decided to be a regular user, allowing a connection of said user terminal with said service system.
(23) The network access method as set forth in claim 21 or 22, wherein said electronic circuit or external storage medium stores access destination information, and said access destination information is sent out.
(24) A network access method of connecting a user terminal to a server managed by a management center in which access authentication information of an authorized user is stored, through a network by access of said user terminal, said method comprising the steps of:
   when a disk, driven by said disk drive and having an electronic circuit in which the living-body authentication information of said user and access authentication information required for access to said network determined for each user are stored, is driven by a disk drive, comparing living-body authentication information of said user obtained by living-body authentication information detection means of said user terminal with said living-body authentication information stored in said electronic circuit, and when both are the same, sending said access authentication information stored in said electronic circuit to said management center through said user terminal;
   wherein said management center compares the received access authentication information with access authentication information previously stored and, only when both are the same, allows the connection of said user terminal.
(25) A network access method of connecting a user terminal to a server managed by a management center in which access authentication information of an authorized user is stored, through a network by access of said user terminal, said method comprising the steps of:
   storing, on an external storage medium with a signal processing function, the living-body authentication information of said user and access authentication information required for access to said network determined for each user are stored;
   comparing living-body authentication information of said user obtained by living-body authentication information detection means of said user terminal with said living-body authentication information stored in said external storage medium;
   when both are the same, sending said access authentication information stored in said external storage medium to said management center through said user terminal;
   wherein said management center compares the received access authentication information with access authentication information previously stored and, only when both are the same, allows the connection of said user terminal.
(26) The network access method as set forth in claim 24 or 25, wherein said electronic circuit or external storage medium stores access destination information, and said access destination information is sent out.
(27) The network access method as set forth in any one of claims 21 to 26, wherein information transmission and reception of said user to and from said network is performed by a nickname previously given to said user.
(28) The network access method as set forth in claim 21 or 27, wherein said network stores personal information of said user and said access authentication information.
(29) The network access method as set forth in any one of claims 21 to 28, wherein said access authentication information contains user's ID and password.
(30) The network access method as set forth in any one of claims 21 to 29, wherein said access authentication information is enciphered and output from said user terminal, and said network decodes the enciphered access authentication information received.
(31) The network access method as set forth in any one of claims 21 to 30, wherein said access authentication information is changed each time access is performed by said user.
(32) The network access method as set forth in any one of claims 21 to 31, wherein said access authentication information that changes is processed based on an open cryptographic key and a secrete decoding key so that only said user terminal and said network can know.
(33) The network access method as set forth in any one of claims 21 to 32, wherein said network generates and enciphers access authentication information for the next access of said user and sends it to said user terminal, and at the time of the next access from said user terminal, said access authentication information received from said network is sent out.
(34) The network access method as set forth in any one of claims 21 to 33, wherein information on a user stored in said network is managed by a base code given to said user, and user information for specifying said user can be read and written only by a basic code comprising an auxiliary code generated in said electronic circuit and said base code.
(35) The network access method as set forth in any one of claims 21 to 33, wherein information on a user stored in said network is managed by a base code given to said user, and user information for specifying said user can be read and written only by a basic code comprising an auxiliary code generated in said external storage medium and said base code.
(36) The network access method as set forth in claim 34, wherein said auxiliary code is enciphered by an open cryptographic key and is sent from said user terminal, and said network uses said auxiliary code by decoding it with a secrete decoding code corresponding to said open cryptographic key.
(37) The network access method as set forth in any one of claims 21 to 35, wherein information transmission and reception between said user and said network is implemented through an enciphering process using an open cryptographic key and a decoding process using a secrete decoding key corresponding to said open cryptographic key.
(38) The network access method as set forth in any one of claims 21 to 37, wherein said living-body authentication information is fingerprint authentication information, face authentication information, voiceprint authentication information, or iris authentication information.
(39) A storage medium with a program for causing a computer to carry out the processing as set forth in any one of claims 21 to 38.

### ADVANTAGES OF THE INVENTION

According to the present invention, personal information stored on an optical disk (including ordinary disk storage media) is enciphered and stored on the memory region of an electronic circuit mounted on the optical disk. The personal information is also enciphered and stored in a service provider. The two pieces of personal information can be enciphered and decoded only by a cryptographic key and a decoding key that only the user and provider know, so security is remarkably enhanced. That is, the optical disk of a user functions as the passport of the user to a network society. Therefore, the provision of information can be limited to destination terminals desired by a user. When receiving network services (when gaining access to a network, users need not to input information for authentication (ID and a password). Information for authentication is automatically generated by an optical disk driven and can be decoded only by a user and a service provider (management server). Furthermore, a bidirectional one-time password is sent out. Thus, at the time of access to a network, security is ensured. Users can freely take part in, belong to, and secede from service communities while maintaining strict security. What is disclosed to network societies by users is not user's name but user's nickname, so the problem of the disclosure of personal information is no problem. Thus, according to the present invention, access to the Internet is obtained by information that is stored in an electronic circuit mounted on an optical disk for each user. Therefore, even if user's nickname is disclosed, the real existence of the user is guaranteed. Thus, users are able to obtain access to the Internet and receive services, while maintaining strict security.

### BRIEF DESCRIPTION OF THE DRAWINGS

FIG. 1 is a basic configuration block diagram of a preferred embodiment of a network access system according to the present invention;
FIG. 2 is a diagram showing the configuration of the preferred embodiment in which an optical disk is driven with a disk drive;
FIG. 3 is a flowchart showing a registration processing procedure in a user registration center and a management center according to the preferred embodiment of the present invention;
FIG. 4 is a flowchart showing a processing procedure for forming the entry of a user into a society (channel) according to the preferred embodiment of the present invention; and
FIG. 5 is a diagram showing the functions and service contents displayed on the display screen of a user's PC that are available in the preferred embodiment of the present invention.

### DESCRIPTION OF THE NUMERALS

- 1A~1E: a user terminal
- 2A~2E: a front end service
- 3: a management center
- 4: a user registration center
- 11A~11E: a living body authentication section
- 31A~31F: a agent
- 311~313: a channel CH1~CH3
- 100: a disk drive
- 110: a electronic circuit
- 111: a transmitting-receiving unit
- 112: a signal processing unit
- 113: a memory
- 120: a optical data storage
- 130: a drive unit
- 140: a memory
- 200: a transmitter-receiver
- 300: a personal computer
- 310: a read-only memory (ROM)
- 320: a random access memory (RAM)
- 330: an arithmetic processing unit
- 340: a display
- 400: a living body authentication device

### DESCRIPTION OF THE PREFERRED EMBODIMENTS

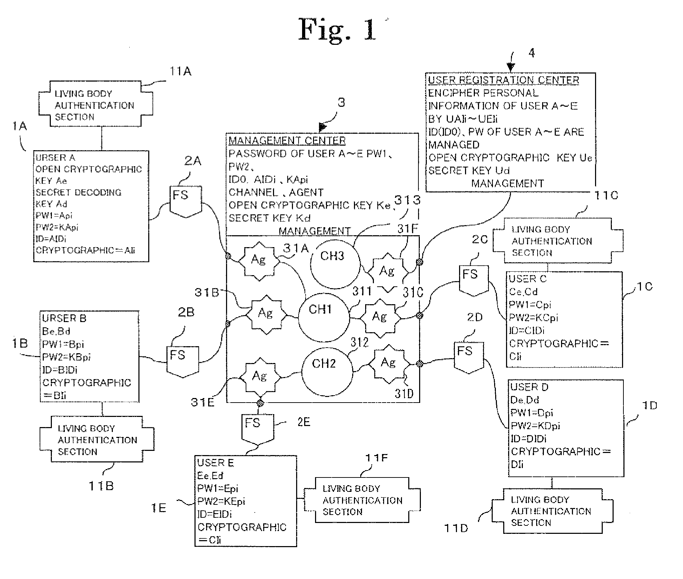

The configuration and operation of a preferred embodiment of a network access system, method and storage medium according to the present invention will hereinafter be described in detail with reference to the accompanying drawings. FIG. 1 is a basic system configuration diagram for carrying out a network access systems according to the present invention.

In the following description, the present invention is applied to an optical disk equipped with an electronic circuit that has a central processing unit (CPU) function and a memory, etc. However, it is needless to say that the present invention is not limited to such an optical disk, but may be applicable to arbitrary disks and storage media. A configuration for carrying out the present invention is not limited to the configuration described below. The present invention can employ an arbitrary well-known configuration, and can adopt configurations capable of achieving the same function.

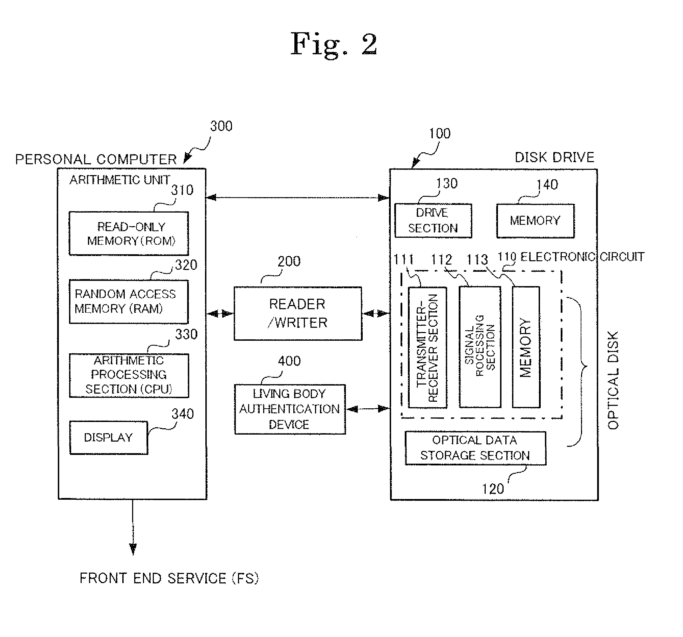

FIG. 2 is a diagram showing the configuration of this embodiment in which an optical disk is driven with a disk drive. In the configuration of FIG. 2, by rotating an optical disk with a disk drive 100, data is read from or written to the optical disk. The optical disk has a data storage section provided on one side thereof, on which data (contents data, etc.) is stored. On the other side of the optical disk, an electronic circuit (CPU) 110 for carrying out predetermined signal processing is mounted. The electronic circuit 110 is equipped with a transmitting-receiving unit 111, a signal processing unit 112, and a memory region 113. The processed signals in the electronic circuit 110 and external information, for example, are sent to and received from an external circuit through the radio unit (transmitting-receiving unit) 111 of the disk drive as radio signals.

The disk drive 100 is provided with an insertion slot (not shown) into which the optical disk is inserted. The optical disk inserted is rotated at a predetermined speed. With the optical disk being rotated, laser light is irradiated from an optical pickup toward the optical disk surface, and the reflected light is detected through the optical pickup, whereby optically recorded data is read out. Laser light is also irradiated from the optical pickup to write data to the optical disk.

The disk drive 100 is equipped with a drive unit 130 for rotating the optical disk and a memory region 140 (which is not necessarily required). One side of the optical disk is equipped with an optical data storage 120, which has at least either a ROM region, on which music information, video information, program information, and other information are stored, or a RAM region, to which arbitrary data can be written. The other side of the optical disk is equipped with the electronic circuit 110 having a CPU function. The electronic circuit 110, for example, can be formed as a radio frequency identification (RF-ID) section. Of course, the electronic circuit 110 can also be provided on the above-described one side.

The RF-ID section generally makes possible non-contact communication which uses electromagnetic waves. That is, reading and writing of data from and to a semiconductor memory (IC chip) can be performed in a non-contact state by the RF-ID section. The RF-ID section normally comprises an IC chip and a coil-shaped antenna connected to the IC chip.

A transmitter-receiver 200 has a reader-writer function, and transmits and receives data to and from the transmitting-receiving unit 111, provided in the IC chip of the RF-ID section (electronic circuit 110) mounted on the optical disk surface, by radio communication. The data communication between the transmitter-receiver 200 and the transmitting-receiving unit 111 of the electronic circuit 110 is performed, for example, at a transmission rate of 106 Kbytes/s (Kbps).

If the electronic circuit 110 (RF-ID section) receives radio waves from the transmitter-receiver 200 through the antenna (transmitting-receiving unit 111), a resonance phenomenon causes an electromotive force to occur (electromagnetic induction, etc.), and this electromotive force is rectified by a power-supply rectifier and is used as a power source for the electronic circuit 110. With this power source, the IC chip of the RF-ID section is started. It is a matter of course that the power supply is not limited to such a configuration.

A personal computer (PC) 300 is equipped with a read-only memory (ROM) (storage device) 310 on which basic information such as an operating system (OS) is stored, a random access memory (RAM) 320 as a rewritable storage device, an arithmetic processing unit 330 such as a CPU, and a display 340 such as a liquid crystal display. The PC 300 performs desired signal processing by transmitting and receiving data to and from the disk drive 100.

A living body authentication device 400 is used to limit the start and operation of this system to only authorized users. Examples of living body parameters are fingerprint authentication, face authentication, voiceprint authentication, and iris authentication parameters. When starting the disk drive 100 connected to the PC 300, a user touches, for example, a fingerprint reader for fingerprint authentication with a predetermined finger so that the fingerprint is optically read, and then the read fingerprint is compared with a previously registered user's fingerprint. Only when the both are the same, the user is authorized to use the disk drive 100 as a regular user.

Based on the configuration described above, this embodiment adopts various schemes to prevent leakage of personal information due to illegal impersonation.

First, an optical disk with the electronic circuit 110 having a memory region is prepared for each user, or it is prepared for each community in which a user desires to participate. On the memory region of the electronic circuit 110, user's identification (ID) and information required for access are stored. These pieces of information (e.g., ID, a password, etc.) are altered each time a user gains access to a community, and on top of that, these pieces of information are enciphered in a form that only the user and the management center (which is installed at a service provider) can know. On the memory region of the electronic circuit, data for user authentication is also stored. In this embodiment, living-body authentication data is used, fingerprint data being stored.

The disk drive 100 is connected with a fingerprint detector which functions as the living body authentication device 400, or has the fingerprint detector incorporated therein. If the user inserts his own optical disk into the disk drive, the disk drive compares the fingerprint data obtained by fingerprint detector with the fingerprint data stored on the memory region of the electronic circuit and, when both data are the same, judges the user to be a regular user. Next, the subsequent processing steps are carried out.

Referring to FIG. 1, this embodiment of the present invention is applied to the case where one or a plurality of users previously registered, A to D, use terminals 1A to 1D (PC 300 of FIG. 2) to take part in a community managed by the management center 3 (which functions as a service provider) through a network such as the Internet, etc.

The community managed by the management center 3 is provided with a plurality of societies 311 to 313 (e.g., channels CH1 to CH3 in FIG. 1). Users enter their desired societies by sending an entry request to the management center 3 through the front end services 2A to 2D...

In this embodiment, users are registered beforehand in an organization (user registration center 4) which controls the management center 3, and only registered users can receive network services (entry into a society, etc.) managed by the management center 3. That is, each of registered users, given user's code ID, a password, etc., sends these pieces of information to the management center 3, and only the user judged to be a regularly registered user by the management center 3 is able obtain access to the management center 3 to receive the above-described services.

The management center 3 has a great number of agents 31A to 31E ···, which are used to control connections between the front end services 2A to 2D ··· and the societies 311, 312, 313 ··· (channels CH1, CH2, CH3 ···). In FIG. 1, the user's terminals 1A to 1E are provided with corresponding agents 31A to 31E.

The management center 3 has the user registration center 4 incorporated therein, or is connected through the agent 31F with the user registration center 4, in which user information is stored. By enciphering personal information, ID information, password information, and other information as user information when necessary, the user registration center 4 stores and manages them. For instance, personal information, such as the driver's licenses and resident's cards of users A to E, is coded by a corresponding cryptographic key (UA 11 to UE11) and is stored on the memory region of the user registration center 4. ID information and password information, allocated to each user, are also managed. In the example of FIG. 1, "U" indicates a user, "A and E" are individual users, "I" is personal information, and a numeral last added is the number of times that access was performed.

The user registration center 4 is used to manage various kinds of information, and manages various kinds of information, such as the passwords PW1 and PW2 and ID information (ID0, AIDi) of users A to E, the password KApi of the management center 3, channels, agents, an open cryptographic key Ke, a secret decoding key Kd, etc. The user registration center 4 is connected to the management center 3 through the agent 31F so that information can be transmitted and received therebetween.

The front end services 2A to 2E are connected to the agents 31A to 31F, and through these agents, the connection of the management center 3 with a desired front agent service is directly made. This differs from a normal Internet connection in that units or other devices to be connected together are connected by using their IP addresses.

In the configuration described above, when transmitting and receiving data between the user terminals 1A to 1E and the management center 3 (user registration center 4), various enciphering processes and decoding processes are performed in order to ensure security. These enciphering processes are performed by open cryptographic keys, while the decoding processes are performed by secret decoding keys corresponding to open cryptographic keys.

Next, the process of registering user's information in the user registration center 4 and management center 3 and the process of forming the entry of a user into a society will be described according to this embodiment.

Initially, a description will be given of the meanings of symbols used in these processes (in this example, a description will be given of user A).

"Ae[ID0, Ap0, AI0]" represents information enciphered from the first ID (base code ID0), password (Ap0), and cryptographic key (AI0) of user A by the open cryptographic key Ae of user A.

"Ad{Ae[ID0, Ap0, AI0]}" represents information decoded from the enciphered information Ae[ID0, Ap0, AI0] by the secrete decoding key Ad.

"Ke" and "Kd" represent an open cryptographic key and a secret decoding key that are managed in the management center 3, and they are made beforehand in the management center 3.

"Ue" and "Ud" represent an open cryptographic key and a secret decoding key that are managed in the user registration center 4, and they are likewise made beforehand in the user registration center 4.

"UAI0" is the initial cryptographic key of user A issued by the user registration center 4. The user registration center 4 enciphers personal information of user A by using the initial cryptographic key UAI0 of user A, and stores and manages the enciphered information in a holder labeled "base code ID0" that is to be described later.

The base code ID0 is a code that is uniquely issued by the user registration center 4. An example is a unique code such as P4KYU%7. In reality, the base code ID0 is represented by a code that is assumed to be unique. The user registration center 4 manages personal information and

other information of user A by using the base code ID0, and based on this base code ID0, reading and writing of information are performed. The user registration center 4 can manage only information corresponding to the base code ID0, but cannot obtain information specifying each user.

"Kd{Ke[ID0, Ap0]}" means information decoded by the secrete decoding key Kd of the management center 3 from the information Ke[ID0, Ap0] enciphered from information [ID0, Ap0] by the open cryptographic key Ke of the management center 3.

"Ad{Ae[ID0, Ap0]}" means information decoded by the secrete decoding key Ad of user A from the information Ae[ID0, Ap0] enciphered from information [ID0, Ap0] by the open cryptographic key Ae of user A.

"AID1" is called a basic code and consists of a base code ID0 and an auxiliary code AAID and is represented by AID1 = ID0 (base code) + AAID1 (auxiliary code). The auxiliary code AAID1 is made by the electronic circuit mounted on an optical disk that a user has.

Information of user A (not only personal information but also all necessary information) cannot be obtained without the basic code. That is

to say, information specifying user A cannot be accessed by the base code ID0 or auxiliary code AAID0 alone. It can be accessed only by the basic code AID 1 containing both. As a result, as previously described, the user registration center 4 cannot obtain access to information that specifies user A.

For instance, if the base code ID0 is represented by OP4KY%7 and the auxiliary code AAID 1 by QSC56VBA, the basic code AID 1 can be expressed as AID 1 = OP4KY%7 + QSC56VBA.

"Ud{Ue[ID0, UAI1, Ap1]}" represents information decoded by the secrete decoding key Ud of the user registration center 4 from the information Ue[IDO, UAI1, Ap1] enciphered from information [ID0, UAI1, Ap1] by the open cryptographic key Ue of the user registration center 4.

"Ke[ID0, AID 1, Ap 1, nickname]" represents information enciphered from information [ID0, AID1, Ap1, nicknamel by the open cryptographic key Ke of the management center 3.

"Kd{Ke[ID0, AID1, Ap1, nickname]}" represents information decoded by the secrete decoding key Kd of the management center 3 from the information Ke[ID0, AID1, Ap1, nickname] enciphered from information [ID0, AID1, Ap1, nickname] by the open cryptographic key Ke of the management center 3.

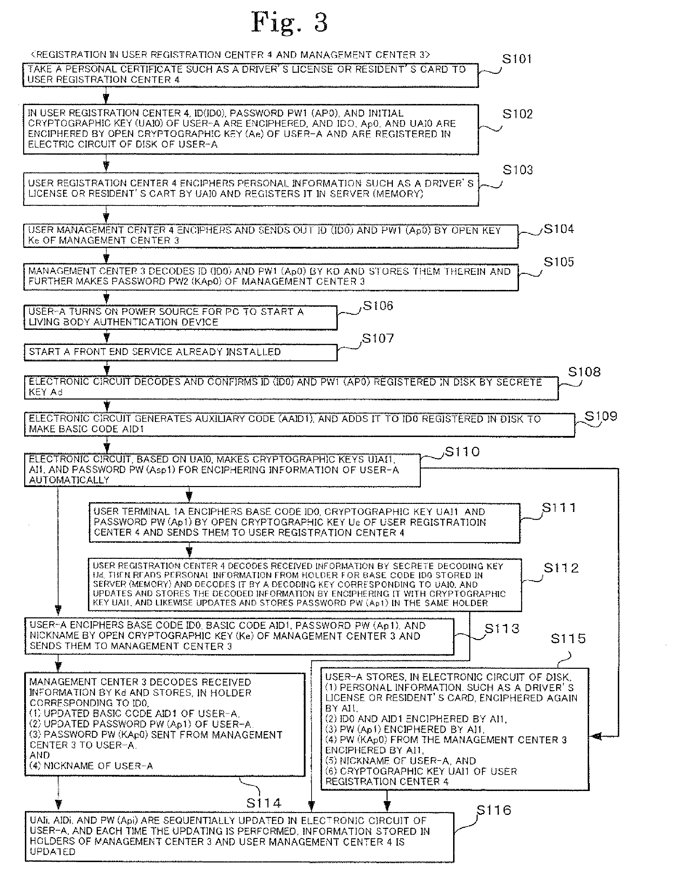

Next, the registration process in the user registration center 4 and management center 3 will be described with reference to a flowchart of FIG. 3.

First, user A takes a personal certificate such as a driver's license or resident's card to the user registration center 4 (step S101). In the user registration center 4, the ID (base code IDO), password PW1 (initial password AP0 of user A), and initial cryptographic key (AIO) of user A are enciphered by the open cryptographic key (Ae) of user A and are registered in the electronic circuit mounted on the optical disk of user A (step S102). In addition, personal information such as a driver's license or resident's card is enciphered by the initial cryptographic key UAI0 of the user registration center 4 and is registered and stored in a server (memory) (step S103).

The user registration center 4 also enciphers the information ID (IDO) and password PW1 (Ap0) of user A with the open cryptographic key Ke prepared in the management center 3 and sends them to the management center 3 (step S 104).

The management center 3 decodes the information ID (IDO) and password PW (Ap0) received from the user management center 4 by the secrete decoding key Kd prepared in the management center 3 and stores them therein, and makes a password PW2 (KAp0) that is to be stored therein (step S105).

When actually obtaining access to the management center 3, user A turns on a power source for a PC and peripheral devices and then performs living-body authentication by a living body authentication device 11A (living body authentication device 400 in FIG. 2). After being confirmed as an authorized user, user A starts the optical disk (step S106) and starts the front end service 2A installed in the optical disk or PC (step S107).

Next, the electronic circuit decodes by the previously prepared secrete decoding key Ad the ID (base code ID0) and password PW1 (Ap0) registered in the optical disk at the user registration center 4 and confirms them (step S108). The electronic circuit also generates an auxiliary code (AAID1), and adds it to the base code ID0 registered in the optical disk to make a basic code AID1 (AID1 = ID0 + AAID1) (step S109). At the same time, the electric circuit, based on the initial cryptographic key UAI0 registered in the user registration center 4, makes the cryptographic key UIAI1, cryptographic key AI1, and password PW (Ap1) of user A that are used for encipherment in the user registration center 4 (step S110). The electronic circuit of the user terminal 1A makes the open cryptographic key Ae, secrete decoding key Ad, and password PW1 of user A, the password PW, ID (basic bode AID1), and cryptographic key Ali that are used in the management center 3, and so forth. Likewise, the user terminals 1B to 1E make similar information.

The user terminal 1A enciphers the base code ID0, cryptographic key UAI1, and password PW (Ap 1) by the open cryptographic key Ue of the user registration center 4 and sends them to the user registration center 4 (step S111).

The user registration center 4 decodes the received information by the secrete decoding key Ud, then reads personal information from the holder labeled the base code ID0 and decodes the personal information by a decoding key corresponding to the cryptographic key UAI0, and enciphers and updates the decoded information by the cryptographic key UAI1 and stores the updated information. The user registration center 4 also updates and stores the password PW (Ap1) in the same holder (step S112).

The user terminal 1A enciphers the base code ID0, basic code AID1, password PW (Ap1), and nickname of user A, which are access codes, by the open cryptographic key (Ke) of the management center 3, and sends them to the management center 3 (step S113).

The management center 3 decodes information received from the user terminal A by the secrete decoding key Kd and stores, in the holder corresponding to the base code ID0,
(1) Updated basic code AID of user A,
(2) Updated password PW (Ap1) of user A,
(3) Password PW (KAp0) sent from the management center 3 to user A, and
(4) Nickname of user A (step 5114).

After step S110, the electronic circuit mounted on the optical disk of the user terminal 1A stores
(1) Personal information, such as a driver's license or resident's card, enciphered again by All,
(2) Base code ID0 and AID enciphered by AI1,
(3) Password PW (Ap1) enciphered by AI1,
(4) Password PW (KAp0) from the management center 3 enciphered by AI1,
(5) Nickname of user A, and
(6) Cryptographic key UAI of the user registration center 4 (step S115).

After steps S112, S114, and S115, the ith cryptographic key UAIi, base code AIDi, and password PW (Api) are sequentially updated in the electronic circuit of the optical disk of user A, and each time the updating is performed, information stored in the holders of the management center 3 and user management center 4 is updated (step S116).

As has been described above, in this embodiment, the ID and password of user A required at the time of access to the Internet are automatically generated two-dimensionally, and every time access is obtained, the ID and password are generated so that they are altered with each other. The generated ID and password are enciphered, and they can be decoded only with each other.

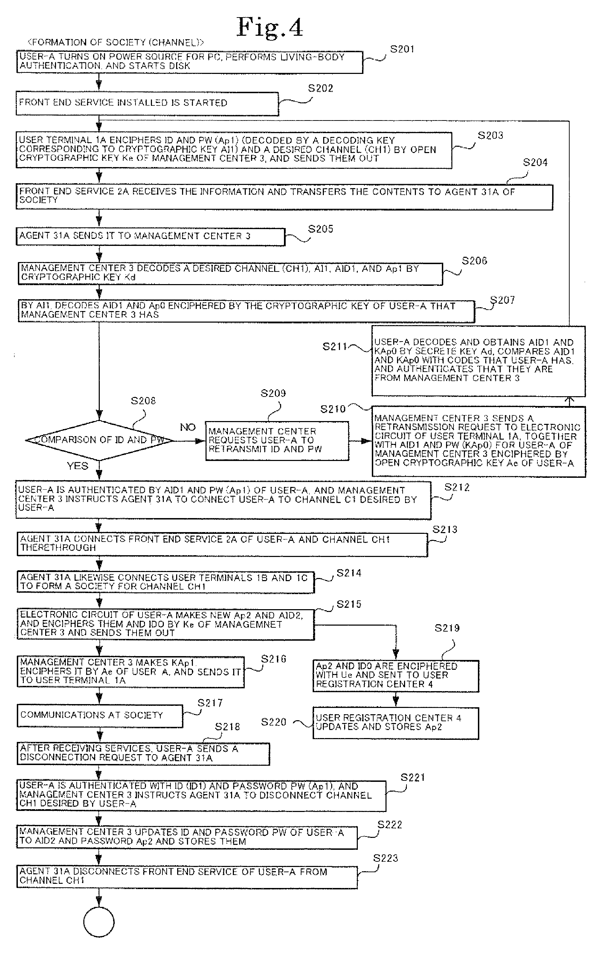

Next, the process of forming the society (channel) will be described with reference to a flowchart of FIG. 4.

First, user A turns on a power source for a PC and peripheral devices and performs living-body authentication by the fingerprint authentication device 11A. After being confirmed as an authorized user, user A starts the optical disk with the disk drive (step S201) and starts the front end service 2A (step S202). This front end service 2A can be used as a special program for Internet connection installed in the optical disk by performing a special program process set for each user. Based on information unique to a user stored on the optical disk, this special program is used to implement the process, provided in the management center 3 at the service provider side, for connecting the user to a society (channel CH1, CH2, or CH3, ...) desired by the user.

That is to say, the user terminal 1A decodes the ID (base code AID1) and password PW (Ap1) registered in an optical disk at the user registration center 4 by a decoding key corresponding to the cryptographic key AI1, and enciphers the decoded ID, password PW (Ap1), and a desired channel (e.g., channel CH1 in this embodiment) by the open cryptographic key Ke of the management center 3, and sends them out (step S203). The front end service 2A transfers the information received from the user terminal 1A, to the agent 31A that controls a connection to a society (step S204). The agent 31A sends it to the management center 3 (step S205).

The management center 3 decodes the desired channel (CH1), cryptographic key AI1, base code AID1, and password Ap1 by the cryptographic key Kd (step S206). The user terminal 1A decodes by the decoding (secrete) key Ad the base code AID 1 and the initial value Ap0 of the password enciphered by the cryptographic key of user A that the management center 3 has, thereby obtaining the base code AID1, and the password word KAp0 stored in the management center 3 (step S207).

Next, the ID of user A thus obtained is compared with the password PW (step S208). If both are not the same, the management center 3 requests user A to retransmit ID and password PW (step S209). The management center 3 sends a retransmission request to the electronic circuit of the user terminal 1A, together with the base code AID 1 and the password PW (KAp0) for user A of the management center 3 enciphered by the open cryptographic key Ae of user A (step S210). Next, user A decodes and obtains the base code AID 1 and the password KAp0 of the management center 3 by the secrete cryptographic key Ad, compares the base code AID 1 and the password KAp0 of the management center 3 with codes that user A has, and authenticates that they are from the management center 3 (step S211). Thereafter, step S211 returns to step S203.

If the ID and password PW are decided to be the same as a result of the comparison in step S208, user A is authenticated by the ID (AID1) and password PW (Ap 1) of user A, and the management center 3 instructs the agent 31A to connect user A to the channel C1 desired by user A (step S212).

The agent 31A connects the front end service 2A of user A and the channel CH1 therethrough (step S213).

The agent 31A likewise connects desired user terminals such as user terminals 1B and 1C to form a society for channel CH1 (step S214).

The electronic circuit mounted on the optical disk of the user terminal 1A makes a new (second access) password Ap2 and cryptographic key AID2, and enciphers them and ID0 with the open cryptographic key Ke of the management center 3 and sends out the enciphered Ap2, AID2, and ID0 (step S215).

The management center 3 makes a password KAp1, enciphers it with the open cryptographic key Ae of user A, and sends out the enciphered password KAp 1 to the user terminal 1A (step S216). User A receives communications and services from the society (step S217). After receiving services, user A sends a disconnection request to the agent 31A (step S218).

After step S218, if user A is authenticated with the ID (ID1) and password PW (Ap1) of user A, the management center 3 instructs the agent 31A to disconnect the channel 1 desired by user A (step S221). The management center 3 updates the ID and password PW of user A to the base code AID2 and password Ap2 newly made and stores them (step S222). And the agent 31A disconnects the front end service 2A of user A from the channel CH 1 (step S223).

On the other hand, after step S215, the password Ap2 and base code ID0 at the time of the second access of user A to the user registration center 4 are enciphered with the open cryptographic key Ue and sent to the user registration center 4 (step S219). The user registration center 4 updates the password Ap2 decoded with the secrete decoding key Ud and stores it (step S220).

Through the same processing as the processing described above, other users are also connected to desired channels, from which they receive desired services.

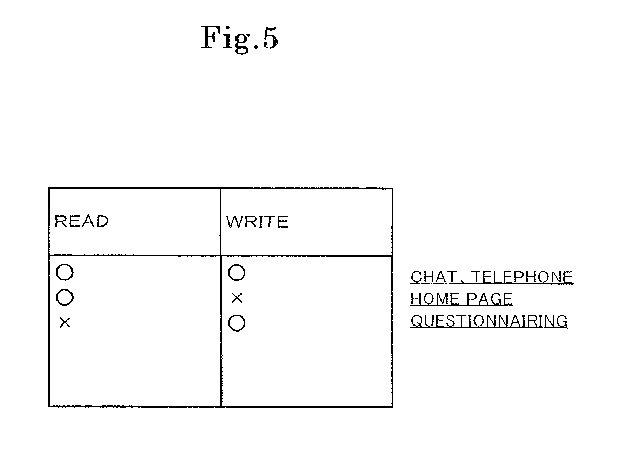

In this manner, a plurality of users are able to take part in a predetermined society. On the display screen of the PC of user A participating in the society, the notice board of the society is displayed, and nicknames of participants, including user A, are displayed. As shown in FIG. 5, the notice board displays the reading and writing functions and services (chat, telephone, home page, questionnairing, etc.).

In this embodiment, desired front end services to be connected to each other are directly connected, not IP networks or e-mail addresses. Therefore, without disclosing personal information, e-mail magazines and the like can be received from user terminals installed by e-mail magazine service providers.

If a user terminal is installed at a bank or forwarding agent, accounts can be settled without disclosing credit card information to a trader by inputting a transfer account instruction to a terminal unit of the bank after network shopping. All that is required is to disclose only an address to a forwarding agent, so unlimited disclosure of personal information can be avoided and security is enhanced.

Each process in the above-described embodiment is described as a program, and processes based on this program can be implemented by a computer. That program is stored on a storage medium.

The configurations and operations of the preferred embodiments of the present invention have been described in detail. However, such embodiments are mere examples of the present invention, and are not to limit the present invention. It would be obvious to those skilled in this art that within the scope of the present invention, many modifications and variations are possible according to specified uses. For instance, the electronic circuit may be an optical circuit and the data may be stored in the electronic circuit or/and the disk. Any memory medium such as USB memory capable of being removably connected from the external may be used.

## Claims

1. A network access system in which a user terminal connects to a service community provided in a service provider connected to a network by accessing said service community, comprising:
a disk with an electronic circuit having a memory region on which living-body authentication information for living-body authentication of a user and access authentication information required for access to said network determined for each user are stored;
living-body authentication means which, when said disk is started, acquires living-body information about said living-body authentication information from said user, compares said living-body information with said living-body authentication information stored in said electronic circuit, and when both are the same, sends said access authentication information stored in said electronic circuit to said network; and
access authentication means, provided in said network, which, based on the received access authentication information, decides whether said user is a regular user and, when said user is decided to be a regular user, allows a connection of said user terminal with said service community.

2. A network access system in which a user terminal connects to a service community provided in a service provider connected to a network by accessing said service community, comprising:
an external storage medium, connected to said user terminal and having a signal processing function, on which living-body authentication information for living-body authentication of a user and access authentication information required for access to said network determined for each user are stored;
living-body authentication means which acquires living-body information about said living-body authentication information from said user, compares said living-body information with said living-body authentication information stored in said external storage medium, and when both are the same, sends said access authentication information stored in said external storage medium to said network; and
access authentication means, provided in said network, which, based on the received access authentication information, decides whether said user is a regular user and, when said user is decided to be a regular user, allows a connection of said user terminal with said service community.

3. The network access system as set forth in claim 1 or 2, wherein said electronic circuit or external storage medium stores access destination information, and said access destination information is sent out.

4. The network access system as set forth in any one of claims 1 to 3, wherein said network is equipped with a management center for managing information which contains the access authentication information, the decision by said access authentication means being performed by comparison with access authentication information managed in said management center.

5. A network access system for performing a connection to a community containing a society which is a server managed by a management center by access of a user terminal to said community through a network, said management center having access authentication information of a user allowed to connect to said community, said system comprising:
said living-body authentication information detection means, incorporated in or connected to said user terminal, for detecting living-body authentication information of said user; and
a disk drive connected to said user terminal; and
a disk driven by said disk drive and having an electronic circuit in which the living-body authentication information of said user and access authentication information required for access to said network determined for each user are stored;
wherein, when driving said disk by said disk drive, living-body authentication information detected from said user by said living-body authentication information detection means is compared with said living-body authentication information stored in said electronic circuit, and when both are the same, said access authentication information stored in said electronic circuit is sent to said management center through said user terminal;
and wherein, when the received access authentication information is the same as access authentication information previously stored, said management center decides that said user is a regular user registered, and allows said user terminal to connect to said community.

6. A network access system for performing a connection to a community containing a society which is a server managed by a management center by access of a user terminal to said community through a network, said management center having access authentication information of a user allowed to connect to said community, said system comprising:
said living-body authentication information detection means, incorporated in or connected to said user terminal, for detecting living-body authentication information of said user; and
an external storage medium, connected to said user terminal and having a signal processing function, on which living-body authentication information of said user and access authentication information required for access to said network determined for each user are stored;
wherein living-body authentication information detected from said user by said living-body authentication information detection means is compared with said living-body authentication information stored in said external storage medium, and when both are the same, said access authentication information stored in said external storage medium is sent to said management center through said user terminal;
and wherein, when the received access authentication information is the same as access authentication information previously stored, said management center decides that said user is a regular user registered, and allows said user terminal to connect to said community.

7. The network access system as set forth in claim 5 or 6, wherein said electronic circuit or external storage medium stores access destination information, and said access destination information is sent out.

8. The network access system as set forth in claim 5 or 6, wherein said management center has a user management center incorporated or connected, said user management center having personal information of said user and said access authentication information stored therein.

9. The network access system as set forth in any one of claims 1 to 8, wherein said access authentication information contains user's ID and password.

10. The network access system as set forth in any one of claims 1 to 9, wherein information transmission and reception of said user to and from said network is performed by a nickname previously given to said user.

11. The network access system as set forth in any one of claims 1 to 10, wherein said access authentication information is enciphered and output from said user terminal, and said network decodes the enciphered access authentication information received.

12. The network access system as set forth in any one of claims 1 to 11, wherein said access authentication information is changed each time access is performed by said user.

13. The network access system as set forth in any one of claims 1 to 12, wherein said access authentication information that changes is processed based on an open cryptographic key and a secrete decoding key so that only said user terminal and said network can know.

14. The network access system as set forth in any one of claims 1 to 13, wherein said network generates and enciphers access authentication information for the next access of said user and sends it to said user terminal, and at the time of the next access from said user terminal, said access authentication information received from said network is sent out.

15. The network access system as set forth in any one of claims 1 to 14, wherein information on a user stored in said network is managed by a base code given to said user, and user information for specifying said user can be read and written only by a basic code comprising an auxiliary code generated in said electronic circuit and said base code.

16. The network access system as set forth in any one of claims 1 to 14, wherein information on a user stored in said network is managed by a base code given to said user, and user information for specifying said user can be read and written only by a basic code comprising an auxiliary code generated in said external storage medium and said base code.

17. The network access system as set forth in claim 15 or 16, wherein said auxiliary code is enciphered by an open cryptographic key and is sent from said user terminal, and said network uses said auxiliary code by decoding it with a secrete decoding code corresponding to said open cryptographic key.

18. The network access system as set forth in any one of claims 1 to 17, wherein information transmission and reception between said user and said network is implemented through an enciphering process using an open cryptographic key and a decoding process using a secrete decoding key corresponding to said open cryptographic key.

19. The network access system as set forth in any one of claims 1 to 18, wherein said living-body authentication information is fingerprint authentication information, face authentication information, voiceprint authentication information, or iris authentication information.

20. The network access system as set forth in any one of claims 1 to 3, 7 to 15, and 17 to 19, wherein said disk is an optical disk.

21. A network access method in which a user terminal connects to a service system connected to a network by accessing said service system, comprising the steps of:
storing, on a memory region of an electronic circuit mounted on a disk, living-body authentication information for living-body authentication of a user and access authentication information required for access to said network determined for each user;
when said disk is started, detecting living-body information from said user by detection means, comparing said living-body information with said living-body authentication information stored in said electronic circuit, and when both are the same, sending said access authentication information stored in said electronic circuit to said network; and
in said network, based on the received access authentication information, deciding whether said user is a regular user and, when said user is decided to be a regular user, allowing a connection of said user terminal with said service system.

22. A network access method in which a user terminal connects to a service system connected to a network by accessing said service system, comprising the steps of:
storing, on an external storage medium connected to said user terminal and having a signal processing function, living-body authentication information for living-body authentication of a user and access authentication information required for access to said network determined for each user;
detecting living-body information from said user by detection means, comparing said living-body information with said living-body authentication information stored in said external storage medium, and when both are the same, sending said access authentication information stored in said external storage medium to said network; and
in said network, based on the received access authentication information, deciding whether said user is a regular user and, when said user is decided to be a regular user, allowing a connection of said user terminal with said service system.

23. The network access method as set forth in claim 21 or 22, wherein said electronic circuit or external storage medium stores access destination information, and said access destination information is sent out.

24. A network access method of connecting a user terminal to a server managed by a management center in which access authentication information of an authorized user is stored, through a network by access of said user terminal, said method comprising the steps of
when a disk, driven by said disk drive and having an electronic circuit in which the living-body authentication information of said user and access authentication information required for access to said network determined for each user are stored, is driven by a disk drive, comparing living-body authentication information of said user obtained by living-body authentication information detection means of said user terminal with said living-body authentication information stored in said electronic circuit, and when both are the same, sending said access authentication information stored in said electronic circuit to said management center through said user terminal;
wherein said management center compares the received access authentication information with access authentication information previously stored and, only when both are the same, allows the connection of said user terminal.

25. A network access method of connecting a user terminal to a server managed by a management center in which access authentication information of an authorized user is stored, through a network by access of said user terminal, said method comprising the steps of:
storing, on an external storage medium with a signal processing function, the living-body authentication information of said user and access authentication information required for access to said network determined for each user are stored;
comparing living-body authentication information of said user obtained by living-body authentication information detection means of said user terminal with said living-body authentication information stored in said external storage medium;
when both are the same, sending said access authentication information stored in said external storage medium to said management center through said user terminal;
wherein said management center compares the received access authentication information with access authentication information previously stored and, only when both are the same, allows the connection of said user terminal.

26. The network access method as set forth in claim 24 or 25, wherein said electronic circuit or external storage medium stores access destination information, and said access destination information is sent out.

27. The network access method as set forth in any one of claims 21 to 26, wherein information transmission and reception of said user to and from said network is performed by a nickname previously given to said user.

28. The network access method as set forth in claim 21 or 27, wherein said network stores personal information of said user and said access authentication information.

29. The network access method as set forth in any one of claims 21 to 28, wherein said access authentication information contains user's ID and password.

30. The network access method as set forth in any one of claims 21 to 29, wherein said access authentication information is enciphered and output from said user terminal, and said network decodes the enciphered access authentication information received.

31. The network access method as set forth in any one of claims 21 to 30, wherein said access authentication information is changed each time access is performed by said user.

32. The network access method as set forth in any one of claims 21 to 31, wherein said access authentication information that changes is processed based on an open cryptographic key and a secrete decoding key so that only said user terminal and said network can know.

33. The network access method as set forth in any one of claims 21 to 32, wherein said network generates and enciphers access authentication information for the next access of said user and sends it to said user terminal, and at the time of the next access from said user terminal, said access authentication information received from said network is sent out.

34. The network access method as set forth in any one of claims 21 to 33, wherein information on a user stored in said network is managed by a base code given to said user, and user information for specifying said user can be read and written only by a basic code comprising an auxiliary code generated in said electronic circuit and said base code.

35. The network access method as set forth in any one of claims 21 to 33, wherein information on a user stored in said network is managed by a base code given to said user, and user information for specifying said user can be read and written only by a basic code comprising an auxiliary code generated in said external storage medium and said base code.

36. The network access method as set forth in claim 34, wherein said auxiliary code is enciphered by an open cryptographic key and is sent from said user terminal, and said network uses said auxiliary code by decoding it with a secrete decoding code corresponding to said open cryptographic key.

37. The network access method as set forth in any one of claims 21 to 35, wherein information transmission and reception between said user and said network is implemented through an enciphering process using an open cryptographic key and a decoding process using a secrete decoding key corresponding to said open cryptographic key.

38. The network access method as set forth in any one of claims 21 to 37, wherein said living-body authentication information is fingerprint authentication information, face authentication information, voiceprint authentication information, or iris authentication information.

39. A storage medium with a program for causing a computer to carry out the processing as set forth in any one of claims 21 to 38.
